(19) **Europäisches Patentamt**
**European Patent Office**
**Office européen des brevets**

(11) **EP 1 757 566 B1**

(12) **EUROPEAN PATENT SPECIFICATION**

(45) Date of publication and mention
of the grant of the patent:
**12.09.2012 Bulletin 2012/37**

(51) Int Cl.:
**C03C 27/12** (2006.01)   **B60J 1/00** (2006.01)
**B32B 17/10** (2006.01)   **C08J 5/18** (2006.01)
**C08K 3/22** (2006.01)

(21) Application number: **05745768.1**

(22) Date of filing: **01.06.2005**

(86) International application number:
**PCT/JP2005/010030**

(87) International publication number:
**WO 2005/118503 (15.12.2005 Gazette 2005/50)**

(54) **INTERLAYER FILM FOR GLASS LAMINATE AND GLASS LAMINATE**

ZWISCHENSCHICHTFOLIE FÜR GLASLAMINAT UND GLASLAMINAT

FILM INTERCOUCHE POUR PRODUIT STRATIFIÉ DE VERRE ET PRODUIT STRATIFIÉ DE VERRE

(84) Designated Contracting States:
**BE DE FR GB IT NL**

(30) Priority: **01.06.2004 JP 2004163580**
**01.06.2004 JP 2004163581**
**18.06.2004 JP 2004181325**

(43) Date of publication of application:
**28.02.2007 Bulletin 2007/09**

(73) Proprietor: **SEKISUI CHEMICAL CO., LTD.**
**Osaka-shi,**
**Osaka 530 (JP)**

(72) Inventors:
• **HATTA, Bungo**
**New York 12183 (US)**

• **FUKATANI, Juichi**
**c/o SEKISUI CHEMICAL CO., LTD. 1**
**Shiga, 528-8585 (JP)**

(74) Representative: **Merkle, Gebhard**
**TER MEER STEINMEISTER & PARTNER GbR,**
**Patentanwälte**
**Mauerkircherstrasse 45**
**81679 München (DE)**

(56) References cited:
EP-A1- 1 136 457        EP-A1- 1 188 551
EP-A1- 1 227 070        EP-A1- 1 419 999
EP-A1- 1 698 600        EP-A2- 0 727 306
EP-A2- 1 193 048        WO-A1-03/018502
DE-A1- 10 022 037       JP-A- 11 267 519
JP-A- 2000 016 841      JP-A- 2000 063 158
JP-A- 2001 206 745      JP-A- 2001 240 769
JP-A- 2002 326 846

**Description**

The present invention relates to an interlayer film for heat shielding glass laminate having high heat shielding properties, whose visible light transmittance is less likely to be reduced and whose reflective yellow index value is less likely to be increased even when exposed to solar radiation for a long period of time, and a glass laminate using such an interlayer film for glass laminate.

Glass laminates are less likely to be shattered even when broken by external shocks, and are therefore widely used for safety reasons for windows in vehicles (e. g. , automobiles), aircraft, and buildings. Such a glass laminate can be obtained by, for example, interposing an interlayer film for glass laminate formed of a polyvinyl acetal resin, such as a polyvinyl butyral resin, plasticized with a plasticizer between at least a pair of glass plates and integrating them into one unit.

Such a glass laminate using an interlayer film for glass laminate has a high level of safety, but involves a problem that heat shielding properties are poor. Among light rays, infrared rays have a wavelength longer than that of visible rays, that is, a wavelength of 780 nm or longer, and are generally called "heat rays". This is because the energy amount of infrared rays is low as only about 10 % of that of ultraviolet rays, but infrared rays have high thermal effect. Therefore, when once absorbed by some materials, infrared rays are then released as heat, which produces temperature rise. However, for example, in the case of cars, if such infrared rays having high thermal effect (i.e., heat rays) can be blocked by a windshield or side glass, that is, if the heat shielding properties of a windshield or side glass can be improved, it is possible to suppress temperature rise inside a car even when light rays enter the car through the windshield or side glass. In recent years, the area of glass openings in, for example, cars tends to increase, and therefore there is growing demand for development of glass laminates having improved heat shielding properties so that glass openings can have the function of blocking heat rays.

Meanwhile, WO 01/25162 discloses an interlayer film for glass laminate obtained by dispersing heat shielding particles having heat shielding properties, such as tin-doped indium oxide fine particles or antimony-doped tin oxide fine particles, in a polyvinyl acetal resin. A glass laminate using such an interlayer film for glass laminate can have excellent heat shielding properties and electromagnetic wave transmission properties.

EP 1136 457 A1 is directed to a laminated glass which comprises glass sheets and is characterized by a UV transmittance as stipulated in ISO-9050 of at most 30%, a visible light transmittance of at least 70% under a standard light source A, a dominant wavelength of from 480 to 570 nm and an excitation purity of at most 6% at the actual thickness and an interlayer 12 interposed between the glass sheets, wherein the interlayer has heat shielding fine particles with particle diameters of at most 0.2 $\mu$m dispersed therein.

EP 1188 551 A1 is directed to a laminated glass comprising plural glass sheets and an interlayer interposed between the plural glass sheets, wherein the interlayer is an organic resin film having IR cutoff fine particles with diameters of at most 0.2 $\mu$m dispersed therein, the product of the solar transmittances of the respective glass sheets is from 0.3 to 0.6, and the content of the IR cutoff fine particles dispersed in the interlayer is from 0.1 to 0.5 parts by mass in relation to 100 parts by total mass of the interlayer.

EP 1193 048 A2 is directed to a laminated glass comprising a plurality of glass sheets laminated one on another with an interliner provided between the respective adjacent glass sheets, characterized in that said laminated glass has at least a first region and a second region, as viewed from the front, and at the second region, said laminated glass has an infrared transmittance higher than the infrared transmittance at the first region.

EP 0 727 306 A2 provides a laminated glass and a method of producing the same wherein the laminated glass includes first and second transparent glass plates and an interlayer film interposed therebetween. This interlayer film has functional ultra-fine particles which have a particle diameter of up to 0.2 $\mu$m and are dispersed therein.

JP 2000 016841 A provides a laminated glass comprising at least two transparent glass plates and an intermediate resin layer nipped between at least the two transparent glass plates. Therein, treated particles prepared by treating the surfaces of zinc oxide-based particles containing Zn and a metal element (Md) capable having trivalency and/or tetravalency as metal components with (B) a compound having at least one group of the formula: M-Xn [M is a metal atom having an atomic valency of (m), (n) is either one integer within 1 to (m)-1; X is hydrogen atom, chlorine atom, amino group, amide group, $\beta$ -dicarbonyl group or a group expressed by the general formula: $OR^1$ ($R^1$ is at least one kind of group selected from hydrogen atom, an alkyl group, a cycloalkyl group, an aryl group, an aralkyl group and an acyl group which may be substituted)].

JP2002326846 A provides an interlayer for laminated glass composed of a plasticized polyvinyl butyral (PVB) resin comprising 100 pts.wt PVB resin, 30 to 60 pts.wt. plasticizer, 0.1 to 3.0 pts.wt. ITO(indium tin oxide) and 0.1 to 1.0 pt.wt. of a group of UV absorbers including at least one kind of oxalic amide-based UV absorber, wherein the ITO microparticles in the membrane have average particle diameter of ≤80 nm, and are dispersed so that the number of particles of ≥100 nm are ≤1/1 $\mu$m$^2$.

JP2001240769 A provides a surface modified inorganic minute particle treated with the following two compounds (A) and (B). Compound (A): alkoxide of a metal and/or its partially hydrolyzed (condensed) compound. Compound (B):

an organic silica compound shown by general formula (1) and/or its partially hydrolyzed (condensed) compound. $Y_mSiX_n$ (1) wherein Y is an organic functional group, X is a hydrolyzed group, m and n are each an integer of 1-3, and they satisfy n+m=4.

JP2000063158 A provides a laminated glass and an interlayer used therefore, wherein the interlayer is obtained by dispersing a zinc oxide-based grains in a cured product thereof and the laminated glass comprises at least two sheets of transparent plates and the resin interlayer sandwiched between the two sheets of the transparent plates. The resin interlayer contains the above interlayer.

JP2001206745 A provides an intermediate film layer of a sandwich glass having the intermediate film layer between at least two sheets of transparent glass sheet-like bodies, formed by subjecting a resin film, which is formed by using a plasticizer, and is dispersed with functional superfine particles of $\leq 0.2$ $\mu$m in grain size at a mixing ratio of $\leq 10.0$ wt.%, to a sandwiching treatment by thermal pressurizing.

However, there is a problem that when such a glass laminate using an interlayer film for glass laminate containing heat shielding particles is irradiated with high-energy rays such as super xenon light or super UV light, surface activity of the heat shielding particles promotes the deterioration of a matrix resin, and at the same time a change in color of the heat shielding particles occurs. It can be considered that such deterioration of a matrix resin and a change in color of heat shielding particles will occur also when the glass laminate is exposed to solar radiation for a long period of time. Further, deterioration of a matrix resin and a change in color of heat shielding particles can become causes of a reduction in visible light transmittance Tv of a glass laminate and an increase in a reflective yellow index value that is an index of yellowing of a glass laminate, and are therefore serious problems for, particularly, glass laminates for use in vehicles from the viewpoint of safety.

In view of the above circumstances, it is therefore an object of the present invention to provide an interlayer film for glass laminate having high heat shielding properties, whose visible light transmittance is not reduced and whose reflective yellow index value is not increased even when exposed to solar radiation for a long period of time, and a glass laminate using such an interlayer film for glass laminate.

The present invention provides an interlayer film for heat shielding glass laminate comprising:

   a matrix resin;
   a plasticizer; and
   tin-doped indium oxide fine particles and/or antimony-doped tin oxide fine particles, coated with an insulating metal oxide, which are further coated with an organosilicon compound represented by the following formula (A) : Si $(OR^1)_aR^2_b$ (where $R^1$ represents an alkyl group, $R^2$ represents an organic functional group containing an alkyl group, a polyoxyalkylene group, a phenyl group, a styryl group, a (meth)acryloxy group, an epoxy group, a vinyl group, an isocyanate group, a mercapto group or a ureido group, and a and b are each an integer of 1 to 3, provided that a + b is 4, wherein the organosilicon compound is an aromatic organosilicon compound

Hereinbelow, the present invention will be described in detail.

The present inventors have conducted extensive research, and as a result have found that even when an interlayer film for glass laminate obtained by uniformly dispersing heat shielding fine particles, whose surface has been coated with an insulating inert substance, in a matrix resin containing a plasticizer is exposed to solar radiation for a long period of time, its excellent heat shielding properties can be maintained, its visible light transmittance Tv is not reduced, and its reflective yellow index value is not increased. Such findings have led to the completion of the present invention.

As described above, the interlayer film for heat shielding glass laminate of the present invention comprises a matrix resin, a plasticizer, and heat shielding particles as defined in claim 1. The surface of the heat shielding particles has been coated with an insulating inert substance. Since the interlayer film for glass laminate of the present invention contains heat shielding particles, heat rays are prevented from passing through the interlayer film for glass laminate. In addition, since the surface of the heat shielding particles has been coated with an insulating inert substance, the surface activity of the heat shielding particles can be suppressed, thereby preventing deterioration of the matrix resin and a change in color of the heat shielding particles.

The insulating inert substance is not particularly limited. For example, in one specific aspect of the present invention, an insulating inert substance having a band gap energy of 5.0 eV or higher, such as an insulating metal oxide, is used.

Further, in the present invention, insulating metal oxides are used as the inert substance.

In the present invention, an aromatic organosilicon compound represented by the following general formula (A) is used as surface hydrophobizing agent.

$$Si\ (OR^1)_aR^2_b \qquad\qquad (A)$$

where $R^1$ represents an alkyl group, $R^2$ represents an organic functional group containing an alkyl group, a polyoxyalkylene group, a phenyl group, a styryl group, a (meth)acryloxy group, an epoxy group, a vinyl group, an isocyanate group, a mercapto group or a ureido group, and a and b are each an integer of 1 to 3, provided that a + b is 4.

The insulating metal oxide is not particularly limited, but is preferably, for example, at least one selected from the group consisting of silicon oxide (band gap energy: about 9.0 eV), aluminum oxide (band gap energy: about 6.0 to 8.0 eV), and zirconium oxide (band gap energy: about 5.0 eV) .

Examples of a method for coating the heat shielding particles with an insulating metal oxide include, but are not limited to, a method using a sol-gel reaction of a metal alkoxide containing a metal corresponding to a metal constituting the insulating metal oxide, a method using a chelate compound such as acetylacetone, and a method using a metal salt such as chloride.

The aromatic organosilicon compound represented by the above general formula (A) has a molecular frame in which 1 to 3 hydrolyzable groups are bound to a silicon atom, that is, a hydrolyzable organosilyl group. The hydrolyzable organosilyl group may be one in which two or more functional groups having hydrolyzability are bound to the same silicon atom. In a case where two or more silicon atoms are present in one molecule of the organosilicon compound, the hydrolyzable organosilyl group may be one in which at least one functional group having hydrolyzability is bound to each of the silicon atoms.

The hydrolyzable silyl group is a functional group which can be cleaved between a silicon atom and a hydrolyzable group by hydrolysis. Examples of the hydrolyzable group include, but are not limited to, an alkoxy group, an oxime group, an alkenyloxy group, an acetoxy group, and a halogen group (e.g. , chloride, bromine). The hydrolyzable groups bound to a silicon atom may be all the same or different from each other.

Examples of the alkoxy group include, but are not limited to, a methoxy group, an ethoxy group, a propyloxy group, an iso-propyloxy group, a butoxy group, a tert-butoxy group, a phenoxy group, and a benzyloxy group.

In the aromatic organosilicon compound having a hydrolyzable organosilyl group, which is represented by the above formula (A), $R^2$ is an organic functional group containing an alkyl group, a polyoxyalkylene group, a phenyl group, a styryl group, a (meth)acryloxy group, an epoxy group, a vinyl group, an isocyanate group, a mercapto group or a ureido group. Among such organic functional groups, an aromatic functional group containing an aromatic ring, such as a phenyl group, a styryl group or the like, in the molecule is preferred. When $R^2$ is such an aromatic functional group, compatibility with an organic solvent is improved. Among such aromatic functional groups, one having a structure represented by the following general formula (B) is particularly preferred.

$$R^3{}_c\text{-}R^4\text{-}R^5{}_d \qquad \text{(B)}$$

where $R^3$ represents an alkyl group having 1 to 12 carbon atoms or a polyoxyalkylene group having a degree of polymerization of 1 to 12, $R^4$ represents a group containing an aromatic ring such as a phenylene group or a styrylene group, $R^5$ represents an alkyl group having 1 to 12 carbon atoms or a polyoxyalkylene group having a degree of polymerization of 1 to 12, c is an integer of 0 to 1, and d is an integer of 0 to 1.

As will be described later, the interlayer film for glass laminate of the present invention is generally produced by dispersing heat shielding particles in a liquid plasticizer to prepare a dispersion liquid and mixing the dispersion liquid with a matrix resin. In a case where an interlayer film for glass laminate is produced in such a manner, the dispersibility of the heat shielding particles in the dispersion liquid has a great effect on the dispersion state of the heat shielding particles in the resulting interlayer film for glass laminate, which eventually has a great effect on the optical properties (e.g., transparency) of the interlayer film for glass laminate. From such a viewpoint, the organosilicon compound to be used in the present invention is an aromatic organosilicon compound because it has particularly high compatibility with the liquid plasticizer and therefore a dispersion liquid, in which heat shielding particles are well dispersed, can be obtained.

Specific examples of the aromatic organosilicon compound having a hydrolyzable organosilyl group, which is represented by the above general formula (A) include dimethoxymethylphenylsilane, diethoxydiphenylsilane, phenyltrimethoxysilane, phenyltriethoxysilane, hexaphenylcyclotrisiloxane, octaphenylcyclotetrasiloxane, 1,3,5,7-tetramethyl-1,3,5,7-tetraphenylcyclotetrasiloxane, diacetexydiphenylsilane, and diacetoxymethylphenylsilane

However, among organosilicon compounds having a hydrolyzable organosilyl group, which are represented by the above formula (A), cationic organosilyl compounds such as n-phenyl-3-aminopropyltrimethoxysilane may contrarily cause agglomeration of the heat shielding particles. The reason for this can be considered as follows. A cationically-charged amine-based organosilane compound present on the surface of one certain heat shielding particle interacts with unreacted anionic hydroxyl groups remaining on the surface of one or more other surrounding heat shielding particles.

The mode of coating of the surface of the heat shielding particles is not particularly limited as long as the active surface of the heat shielding particles is coated with the insulating inert substance to the extent that deterioration of the matrix resin can be suppressed. For example, the surface of each of the heat shielding particles can be entirely coated with the insulating inert substance. Alternatively, the surface of each of the heat shielding particles may be coated with the insulating inert substance in a stripe pattern, that is, there may be a region or regions not coated with the insulating inert substance on the surface of each of the heat shielding particles. The insulating inert substance may be adsorbed to, immobilized on, or deposited on the surface of each of the heat shielding particles.

The thickness of an insulating inert substance layer with which the heat shielding particles are coated is preferably in the range of 1 to 20 nm, more preferably in the range of 1 to 10 nm. If the thickness of an insulating inert substance layer is less than 1 nm, there is a case where the effect of suppressing surface activity cannot be sufficiently obtained. On the other hand, if the thickness of an insulating inert substance layer exceeds 20 nm, there is a case where the resulting interlayer film for glass laminate is poor in transparency to visible light.

The refractive index of the insulating inert substance layer formed is preferably lower than that of the heat shielding particles but higher than that of the matrix resin or plasticizer.

The average particle diameter of the heat shielding particles coated with the insulating inert substance is preferably in the range of 5 to 100 nm, more preferably in the range of 10 to 80 nm. If the average particle diameter of the heat shielding particles coated with the insulating inert substance is less than 5 nm, there is a case where it is difficult to disperse the heat shielding particles in the matrix resin. On the other hand, if the average particle diameter of the heat shielding particles coated with the insulating inert substance exceeds 100 nm, there is a case where the visible light transmittance of the resulting heat shielding glass laminate is low and the haze thereof is high.

The amount of the heat shielding particles contained in the interlayer film for heat shielding glass laminate of the present invention is preferably in the range of 0.1 to 3 parts by weight per 100 parts by weight of the matrix resin. If the amount of the heat shielding particles is less than 0.1 parts by weight, there is a case where the effect of shielding heat cannot be sufficiently obtained. On the other hand, if the amount of the heat shielding particles exceeds 3 parts by weight, there is a case where the visible light transmittance of the resulting heat shielding glass laminate is low.

The matrix resin to be used in the present inventionis not particularly limited. For example, polyvinyl acetal resins are preferably used. The polyvinyl acetal resins are not particularly limited as long as they are obtained by acetalizing polyvinyl alcohol with aldehyde, but polyvinyl butyral is preferably used. If necessary, two or more polyvinyl acetal resins are used together.

The degree of acetalization of the polyvinyl acetal resin is preferably in the range of 40 to 85 %, more preferably in the range of 60 to 75 %.

The polyvinyl acetal resin can be prepared by acetalizing polyvinyl alcohol with aldehyde.

The polyvinyl alcohol that is a raw material of the polyvinyl acetal resin is usually obtained by saponifying polyvinyl acetate. In general, polyvinyl alcohol having the degree of saponification of 80 to 99.8 mol% is used.

The degree of polymerization of the polyvinyl alcohol is preferably in the range of 200 to 3,000, more preferably in the range of 500 to 2,000. If the degree of polymerization of the polyvinyl alcohol is less than 200, there is a case where the penetration resistance of the resulting glass laminate is low. On the other hand, if the degree of polymerization of the polyvinyl alcohol exceeds 3,000, there is a case where the moldability of a resin film is poor, and the stiffness of the resin film is too high and therefore the workability thereof is poor.

The aldehyde is not particularly limited. In general, aldehydes having 1 to 10 carbon atoms are preferably used. Examples of such an aldehyde having 1 to 10 carbon atoms include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these aldehydes, n-butyraldehyde, n-hexylaldehyde, and n-valeraldehyde are preferably used, and butyraldehyde having 4 carbon atoms is more preferably used. These aldehydes can be used singly or in combination of two or more of them.

Examples of the plasticizer to be used in the present invention include, but are not particularly limited to, organic plasticizers such as monobasic organic acid esters and polybasic organic acid esters; and phosphoric acid-based plasticizers such as organic phosphoric acid-based plasticizers and organic phosphorous acid-based plasticizers.

Examples of the monobasic organic acid ester-based plasticizer include, but are not particularly limited to, glycol-based esters obtained by reaction between glycol such as triethylene glycol, tetraethylene glycol, or tripropylene glycol and a monobasic organic acid such as butyric acid, isobutyric acid, caproic acid, 2-ethylbutyric acid, heptylic acid, n-octylic acid, 2-ethylhexylic acid, pelargonic acid (n-nonylic acid), or decylic acid. Among them, triethylene glycol organic acid esters such as triethylene glycol-dicaproate, triethylene glycol-di-2-ethyl butyrate, triethylene glycol-di-n-octylate, and triethylene glycol-di-2-ethylhexylate are preferably used.

Examples of the polybasic organic acid ester-based plasticizer include, but are not particularly limited to, esters of a polybasic organic acid such as adipic acid, sebacic acid, or azelaic acid and a linear or branched alcohol having 4 to 8 carbon atoms. Among these esters, dibutyl sebacate, dioctyl azelate, and dibutyl carbitol adipate are preferably used.

Examples of the organic phosphoric acid-based plasticizer include, but are not particularly limited to, tributoxyethyl phosphate, isodecylphenyl phosphate, and triisopropyl phosphate.

The amount of the plasticizer contained in the interlayer film for heat shielding glass laminate of the present invention is preferably in the range of 20 to 100 parts by weight, more preferably in the range of 30 to 60 parts by weight, per 100 parts by weight of the matrix resin. If the amount of the plasticizer is less than 20 parts by weight, there is a case where the penetration resistance of the resulting heat shielding glass laminate is low. On the other hand, if the amount of the plasticizer exceeds 100 parts by weight, there is a case where bleed out of the plasticizer occurs and therefore the resulting interlayer film for glass laminate is poor in transparency and adhesion properties, thereby increasing the optical distortion of the interlayer film for glass laminate.

It is preferred that the interlayer film for heat shielding glass laminate of the present invention further contains an agent for controlling adhesive power. The agent for controlling adhesive power is not particularly limited, but alkali metal salts and alkaline earth metal salts are preferably used. Examples of the alkali metal salts and/or the alkaline earth metal salts include, but are not particularly limited to, potassium salts, sodium salts, and magnesium salts. Examples of an acid to be used for forming such a salt include, but are not particularly limited to, carboxylic organic acids such as octylic acid, hexylic acid, butyric acid, acetic acid, and formic acid; and inorganic acids such as hydrochloric acid and nitric acid.

Among these alkali metal salts and/or alkaline earth metal salts, alkali metal salts and alkaline earth metal salts of an organic acid having 2 to 16 carbon atoms are preferably used, and magnesium salts of carboxylic acid having 2 to 16 carbon atoms and potassium salts of carboxylic acid having 2 to 16 carbon atoms are more preferably used. The magnesium or potassium salts of an organic carboxylic acid having 2 to 16 carbon atoms are not particularly limited, but magnesium acetate, potassium acetate, magnesium propionate, potassium propionate, magnesium 2-ethylbutanoate, potassium 2-ethylbutanoate, magnesium 2-ethylhexanoate, and potassium 2-ethylhexanoate are preferably used. These magnesium or potassium salts of an organic carboxylic acid can be used singly or in combination of two or more of them.

The amount of the agent for controlling adhesive power contained in the interlayer film for heat shielding glass laminate of the present invention is not particularly limited, but is preferably in the range of 0.001 to 1.0 part by weight, more preferably in the range of 0.01 to 0.2 parts by weight, per 100 parts by weight of the matrix resin. If the amount of the agent for controlling adhesive power is less than 0.001 parts by weight, there is a case where the adhesive power of peripheral portion of the resulting interlayer film for glass laminate is weak in a high humidity atmosphere. On the other hand, if the amount of the agent for controlling adhesive power exceeds 1.0 part by weight, there is a case where the adhesive power of the resulting interlayer film for glass laminate is too weak and the interlayer film for glass laminate lacks transparency.

It is also preferred that the interlayer film for glass laminate of the present invention further contain a UV absorber.

As such a UV absorber, a malonic acid ester-based UV absorber such as Propanedioc acid[(4-methoxyphenyl)-methylene]-dimethyl ester ("Hostavin PR-25" manufactured by Clariant) and/or an anilide oxalate-based UV absorber such as 2-Ethyl, 2'-ethoxy-oxalanilide ("Sanduvor VSU" manufactured by Clariant) is preferably used. Alternatively, one or more other well-known benzotriazole-based, benzophenone-based, triazine-based and benzoate-based UV absorbers may be used together with the above-mentioned UV absorber.

Examples of the benzotriazole-based UV absorber include 2-(2'-hydroxy-5'-methylphenyl)benzotriazole ("Tinuvin P" manufactured by Ciba-Geigy), 2-(2'-hydroxy-3',5'-di-t-butylphenyl)benzotriazole ("Tinuvin 320" manufactured by Ciba-Geigy), 2-(2'-hydroxy-3'-t-butyl-5'-methylphenyl)-5-chlorobenzotria zole ("Tinuvin 326" manufactured by Ciba-Geigy), and 2-(2'-hydroxy-3',5'-di-aminophenyl)benzotriazole ("Tinuvin 328" manufactured by Ciba-Geigy), and a hindered amine-based UV absorber such as LA-57 (manufactured by Adeka Argus).

An example of the benzophenone-based UV absorber includes octabenzone ("Chimassor b81" manufactured by Ciba-Geigy).

An example of the triazine-based UV absorber includes 2-(4,6-diphenyl-1,3,5-triazine-2-yl)-5-[(hexyl)oxyphenol] ("Tinuvin 1577FF" manufactured by Ciba-Geigy).

An example of the benzoate-based UV absorber includes 2,4-di-tert-butylphenyl-3,5-di-tert-butyl-4-hydroxybenzoate ("Tinuvin 120" manufactured by Ciba-Geigy).

The amount of the UV absorber contained in the interlayer film for heat shielding glass laminate of the present invention is not particularly limited, but is preferably in the range of 0.01 to 5.0 parts by weight, more preferably in the range of 0.05 to 1.0 part by weight, per 100 parts by weight of the matrix resin. If the amount of the UV absorber is less than 0.01 parts by weight, there is a case where the effect of absorbing UV rays is hardly obtained. On the other hand, if the amount of the UV absorber exceeds 5. 0 parts by weight, there is a case where the weatherability of the resin is deteriorated.

If necessary, the interlayer film for heat shielding glass laminate of the present invention may further contain additives such as antioxidants, light stabilizers, agents for controlling adhesive power (modified silicone oil), flame retardants, antistatic agents, agents for controlling adhesive power, moisture-resistant agents, heat reflective agents, and heat absorbers.

When irradiated with super UV light for 300 hours, the interlayer film for glass laminate of the present invention needs to have a visible light transmittance variation ($\Delta Tv$) calculated by the following formula (1) of 0 % or higher and a reflective yellow index value variation ($\Delta YI$) calculated by the following formula (2) of 0 or a negative value, that is, 0

% or less.

$$\text{visible light transmittance variation } (\Delta Tv) =$$
$$\text{(visible light transmittance measured after irradiation with}$$
$$\text{super UV light)} - \text{(visible light transmittance measured before}$$
$$\text{irradiation with super UV light)} \cdots (1)$$

$$\text{reflective YI value variation } (\Delta YI) = \text{(reflective yellow}$$
$$\text{index value measured after irradiation with super UV light)} -$$
$$\text{(reflective yellow index value measured before irradiation with}$$
$$\text{super UV light)} \cdots (2)$$

Such an interlayer film for glass laminate of the present invention does not cause a reduction in visible light transmittance Tv and an increase in reflective yellow index value even when exposed to solar radiation for a long period of time.

It is to be noted that in this specification, the term "super UV light" means high-energy rays mainly comprising UV rays, which can promote deterioration of weatherability of interlayer films and glass laminates by irradiation for a short period of time. In the present invention, a visible light transmittance variation and a reflective yellow index value variation are used as indices of weatherability, which are calculated after a glass laminate having an interlayer film is irradiated with an intensity of 100 mW/cm$^2$ of UV rays ranging from 295 to 450 nm wavelength for 300 hours at a distance of 235 mm at a black panel temperature of 63°C with the use of EYE Super UV Tester ("SUV-F11" manufactured by Iwasaki Electric Co., Ltd.).
A glass laminate obtained by using the interlayer film for glass laminate of the present invention is also included in the present invention.

It is to be noted that as described above, super UV light may be applied to a glass laminate having an interlayer film.

The thickness of the interlayer film for heat shielding glass laminate of the present invention is not particularly limited. However, in view of minimum penetration resistance and weatherability required of a glass laminate and practical use, the thickness of the interlayer film for heat shielding glass laminate of the present invention is preferably in the range of 0.3 to 0.8 mm. If necessary, from the viewpoint of, for example, improving penetration resistance, the interlayer film for glass laminate of the present invention and one or more other interlayer films for glass laminate may be laminated.

A method for forming a film containing the matrix resin, the plasticizer, the heat shielding particles, etc. is not particularly limited. For example, such a film can be formed by adding a dispersion liquid obtained by dispersing the heat shielding particles coated with the insulating inert substance in the liquid plasticizer and, if necessary, additives to the matrix resin to obtain a mixture, kneading the mixture, and molding the kneaded mixture. A method for kneading the mixture is not particularly limited, and can be carried out, for example, using an extruder, a plastograph, a kneader, a Banbury mixer or calender rolls. Among them, an extruder is preferably used because it is suitable for continuous production. Further, a method for molding the kneaded mixture is not particularly limited, and can be carried out by extrusion, calendering, or pressing. Among them, extrusion using a same directional twin screw extruder is preferably used because the haze of the resulting heat shielding glass laminate is further decreased.

Since the interlayer film for heat shielding glass laminate of the present invention contains the heat shielding particles coated with the insulating inert substance, it has high heat shielding properties and weatherability. Therefore, even when used under strong solar radiation, the interlayer film for heat shielding glass laminate of the present invention can achieve high visible light transmittance while maintaining heat shielding properties. Such an interlayer film for heat shielding glass laminate of the present invention is suitable for use in producing glass laminates for, for example, automotive windshields, side glass, rear glass, and roof glass, glass parts of vehicles such as airclaft and trains, and windows in buildings.

A glass laminate using the interlayer film for heat shielding glass laminate of the present invention is also included in the present invention.

The glass laminate of the present invention is obtained by interposing the interlayer film for glass laminate of the present invention between at least one pair of glass plates.

The glass plate to be used in the present invention is not particularly limited. For example, well-known transparent glass plates can be used. Among these glass plates, heat absorbing glass plates having a solar transmittance of 65 % or less over a wavelength range of 900 to 1, 300 nm are preferably used. The use of such a heat absorbing glass plate together with tin-doped indium oxide (ITO) fine particles or antimony-doped tin oxide (ATO) fine particles produces the effect of highly blocking solar radiation, because the ability of tin-doped indium oxide (ITO) fine particles or antimony-doped tin oxide (ATO) fine particles to block infrared rays is great in a wavelength range longer than 1,300 nm but is relatively low in a wavelength range of 900 to 1,300 nm.

Alternatively, a transparent plastic plate such as a polycarbonate plate or a polymethylmethacrylate plate may be used instead of the glass plate.

A method for producing the glass laminate of the present invention is not particularly limited. For example, well-known methods can be used.

The glass laminate of the present invention can simultaneously achieve both high visible light transmittance and heat shielding properties, and is therefore suitable for use as, for example, automotive windshields, side glass, rear glass, and roof glass, glass parts of vehicles such as aircraft and trains, and windows in buildings, which are likely to be exposed to solar radiation for a long period of time.

According to the present invention, it is possible to provide an interlayer film for heat shielding glass laminate having not only high heat shielding properties and weatherability but also high visible light transmittance and a glass laminate using such an interlayer film for glass laminate.

Further, it is preferred that the interlayer film for glass laminate does not deteriorate the haze of the resulting glass laminate even when produced under high temperature and high humidity conditions. The haze of a glass laminate greatly depends on the particle diameter of heat shielding particles contained in an interlayer film for glass laminate. More specifically, a larger particle diameter of heat shielding particles deteriorates the haze of a glass laminate.

In order to solve such a problem, WO 01/25162 discloses a method for suppressing the deterioration of haze of a glass laminate obtained by regulating the primary particle diameter of heat shielding particles. However, in fact, there is a case where the haze of a glass laminate is deteriorated even when heat shielding particles having a sufficiently small primary particle diameter are used. That is, it is difficult to completely suppress the deterioration of haze of a glass laminate. The main reason for this can be considered as follows. Agglomeration of heat shielding particles called "solvent shock" occurs in an interlayer film for glass laminate during, particularly, production under high temperature and high humidity conditions due to low compatibility between the heat shielding particles and a resin forming the interlayer film for glass laminate.

Therefore, from the viewpoint of suppressing the agglomeration of heat shielding particles called "solvent shock", heat shielding metal oxide fine particles coated with an insulating inert substance and a surface hydrophobizing agent are preferably used in the present invention.

By using heat shielding metal oxide fine particles (hereinafter, also referred to as "heat shielding particles") coated with an insulating inert substance and a surface hydrophobizing agent, it is possible to easily produce an interlayer film for glass laminate in which the heat shielding particles are uniformly dispersed.

The surface of these heat shielding particles is coated with an insulating inert substance for the purpose of reducing the surface activity thereof. Since the interlayer film for heat shielding glass laminate of the present invention contains the heat shielding particles, heat rays are prevented from passing through the interlayer film for glass laminate. In addition, since the surface of the heat shielding particles has been coated with an inert substance, the surface activity of the heat shielding particles is suppressed, thereby preventing deterioration of the matrix resin and a change in color of the heat shielding particles.

Here, the term "inert substance" means a substance which can reduce the surface activity of the heat shielding particles and which can form a coating layer on the surface of fine particles by deposition, adsorption, immobilization, intercrystallization or chemical bonding. The surface coverage of the heat shielding particle is not particularly limited as long as the surface activity of the heat shielding particles can be reduced. More specifically, the surface of each of the heat shielding particles does not need to be entirely coated with the inert substance. That is, the surface of each of the heat shielding particles may be partially coated with the inert substance. Further, the number of kinds of inert substances is not limited to one. For example, the surface of each of the heat shielding particles may be coated with a single layer of a composite material of two or more kinds of inert substances or may be coated with multiple layers, as long as the heat shielding properties of the heat shielding particles are not impaired.

In the interlayer film for glass laminate of the present invention, the heat shielding particles coated with the inert substance are further coated with a surface hydrophobizing agent to improve the dispersibility of the heat shielding particles in the matrix resin or the liquid plasticizer. By coating the heat shielding particles with a surfactant, it is possible to prevent the possibility that agglomeration of the heat shielding particles called "solvent shock" occurs, thereby preventing the deterioration of visible light transmittance and haze of the resulting glass laminate.

The surface hydrophobizing agent to be used in the present invention include reactive aromatic organosilicon compounds. When these surface hydrophobizing agents are aromatic compounds, dispersibility of the heat shielding particles in the resin or plasticizer is improved. Therefore, such aromatic surface hydrophobizing agents are used.

As the aromatic organosilicon compound to be used as the surface hydrophobizing agent, an organosilicon compound represented by the above formula (A) can be used. In a case where the heat shielding particles are coated with such an aromatic organosilicon compound, the resulting coating layer functions as both an insulating inert substance layer and a surface hydrophobizing agent layer. Among these compounds, from the viewpoint of dispersibility of the heat shielding particles, those each having an aromatic ring in its structure are used because they have excellent compatibility with the plasticizer constituting the interlayer film for glass laminate of the present invention.

A method for treating the surface of the heat shielding particles with the surface hydrophobizing agent is not particularly limited, and well-known methods can be used. Examples of such a well-known method include dry methods such as a fluid bed method and a spraying method; wet methods using water or organic solvents; an integral blend method in which the reactive surface treatment agent described above is directly added to an organic solvent; an autoclave method; a method using supercritical fluid; and a reflux method.

In this specification, there is a case where a compound that can be used as the inert substance is described also as the surface hydrophobizing agent. This means that the compound is an inert substance also having the effect of hydrophobizing the surface of the heat shielding particles.

Examples of the liquid plasticizer include, but are not particularly limited to, dihexyl adipate, triethylene glycol-di-2-ethylhexanoate, tetraethylene glycol-di-2-ethylbutyrate, tetraethylene glycol-di-heptanoate, and triethylene glycol-di-heptanoate.

In order to adjust the viscosity or concentration of an dispersing aid or dispersing agent, or alcohol may be used together with the liquid plasticizer.

Examples of the alcohol include, but are not particularly limited to, methyl alcohol, ethyl alcohol, n-propyl alcohol, n-butyl alcohol, n-pentyl alcohol, n-hexyl alcohol, n-heptyl alcohol, n-octyl alcohol, n-decyl alcohol, n-dodecyl alcohol, n-tetradecyl alcohol, n-hexadecyl alcohol, n-octadecyl alcohol, isopropyl alcohol, isobutyl alcohol, sec-butyl alcohol, tert-butyl alcohol, isopentyl alcohol, (-)-2-methyl-1-butanol, tert-pentyl alcohol, cyclopentanol, cyclohexanol, allyl alcohol, crotyl alcohol, methyl vinyl carbinol, benzyl alcohol, $\alpha$-phenyl ethyl alcohol, $\beta$-phenyl alcohol, diphenyl carbinol, triphenyl carbinol, cinnamyl alcohol, ethylene glycol, propylene glycol, 1,3-propanediol, glycerin, pentaerythritol, and catechol. However, in a case where a low-molecular-weight alcohol such as methyl alcohol, or ethyl alcohol is used in a large amount, there is a case where the heat shielding particles dispersed in a dispersion liquid are precipitated. For this reason, the amount of such a low-molecular-weight alcohol to be used is preferably reduced to a necessary minimum.

As the liquid plasticizer, well-known plasticizers conventionally used for forming an interlayer film for glass laminate can be used. Examples of such a plasticizer include, but are not particularly limited to, organic plasticizers such as monobasic organic acid esters and polybasic organic acid esters; and phosphoric acid-based plasticizers such as organic phosphoric acid-based plasticizers and organic phosphorous acid-based plasticizers.

Examples of the monobasic organic acid ester-based plasticizer include, but are not particularly limited to, glycol-based esters obtained by reaction between glycol such as triethylene glycol, tetraethylene glycol, or tripropylene glycol and a monobasic organic acid such as butyric acid, isobutyric acid, caproic acid, 2-ethylbutyric acid, heptylic acid, n-octylic acid, 2-ethylhexylic acid, pelargonic acid (n-nonylic acid), or decylic acid. Among them, triethylene glycols such as triethylene glycol-dicaproate, triethylene glycol-di-2-ethyl butyrate, triethylene glycol-di-n-octylate, and triethylene glycol-di-2-ethylhexylate are preferably used.

Examples of the polybasic organic acid ester-based plasticizer include, but are not particularly limited to, esters of a polybasic organic acid such as adipic acid, sebacic acid, or azelaic acid and a linear or branched alcohol having 4 to 8 carbon atoms. Among these esters, dibutyl sebacate, dioctyl azelate, and dibutyl carbitol adipate are preferably used.

Examples of the organic phosphoric acid-based plasticizer include, but are not particularly limited to, tributoxyethyl phosphate, isodecylphenyl phosphate, and triisopropyl phosphate.

Preferred examples of the matrix resin include, but are not particularly limited to, polyvinyl acetal resins.

A method for producing the interlayer film for heat shielding glass laminate of the present invention will be described. First, the heat shielding particles coated with the inert substance and the surface hydrophobizing agent are dispersed in the liquid plasticizer to prepare a dispersion liquid.

A chelating agent is preferably added to the dispersion liquid. By adding a chelating agent, it is possible to further improve the dispersion stability of the heat shielding particles. Examples of the chelating agent include, but are not particularly limited to, ethylenediaminetetraacetic acid (EDTA) and $\beta$-diketones. Among $\beta$-diketones, acetylacetone, benzoyltrifluoroacetone, and dipivaloyl methane are preferably used.

The amount of the chelating agent to be added is preferably in the range of 0.001 to 2 parts by weight, more preferably in the range of 0.005 to 1 part by weight, per 100 parts by weight of the matrix resin. If the amount of the chelating agent is less than 0.001 parts by weight, there is a case where the effect of preventing agglomeration of the heat shielding particles cannot be obtained. On the other hand, if the amount of the chelating agent exceeds 2 parts by weight, there is a case where foaming occurs during production of an interlayer film for glass laminate.

It is preferred that a compound having one or more carboxyl groups is further added to the dispersion liquid. By adding a compound having one or more carboxyl groups to the dispersion liquid, it is possible to further improve the dispersion stability of the heat shielding particles.

Examples of such a compound having one or more carboxyl groups include aliphatic carboxylic acids, aliphatic dicarboxylic acids, aromatic carboxylic acids, aromatic dicarboxylic acids, and hydroxy acids. Specific examples thereof include benzoic acid, phthalic acid, salicylic acid, and ricinoleic acid. Among these compounds, aliphatic carboxylic acids having 2 to 18 carbon atoms are preferably used, and aliphatic carboxylic acids having 2 to 10 carbon atoms such as acetic acid, propionic acid, n-butyric acid, 2-ethylbutyric acid, n-hexanoic acid, 2-ethylhexanoic acid, and n-octanoic acid are more preferably used.

The amount of the compound having one or more carboxyl groups to be added is preferably in the range of 0.001 to 2 parts by weight, more preferably in the range of 0.005 to 1 part by weight, per 100 parts by weight of the matrix resin. If the amount of the compound having one or more carboxyl groups is less than 0.001 parts by weight, there is a case where the effect of preventing agglomeration of the heat shielding particles cannot be obtained. On the other hand, if the amount of the compound having one or more carboxyl groups exceeds 2 parts by weight, there is a case where the resulting interlayer film for glass laminate is yellowed or adhesion between the interlayer film for glass laminate and glass is poor.

The dispersion liquid and, if necessary, additives are added to the matrix resin, and then they are kneaded and molded to obtain an interlayer film for heat shielding glass laminate of the present invention. The heat shielding particles are excellent in dispersibility because the surface thereof has been coated with the inert substance and the surface hydrophobizing agent so as to be hydrophobic. In addition, excellent dispersibility of the heat shielding particles is maintained during production of an interlayer film for glass laminate under high temperature and high humidity conditions. Further, agglomeration of the heat shielding particles called "solvent shock" does not occur. As described above, since excellent dispersibility of the heat shielding particles is maintained, the heat shielding particles can be uniformly dispersed so that an interlayer film for heat shielding glass laminate having high heat shielding properties and high optical properties is obtained. A method for kneading a mixture of the dispersion liquid, the matrix resin, and, if necessary, additives is not particularly limited, and can be carried out using an extruder, a plastograph, a kneader, a Banbury mixer, or calender rolls. Among them, an extruder is preferably used because it is suitable for continuous production.

As has been described above, since the interlayer film for heat shielding glass laminate of the present invention contains the heat shielding particles, it has heat shielding properties. Further, since the surface of the heat shielding particles have been coated with an insulating inert substance, even when the interlayer film for glass laminate is exposed to solar radiation for a long period of time, visible light transmittance thereof is less likely to be reduced and an increased in reflective yellow index value thereof is effectively suppressed. The reason for this can be considered as follows. The deterioration of the matrix resin caused by direct contact between the heat shielding particles and the matrix resin is suppressed.

(Reference Examples 1 to 4 and Comparative Example 1)

(Reference Example 1)

(1) Preparation of tin-doped indium oxide fine particles coated with phosphate

NaCl, NaHPO$_4$, KH$_2$PO$_4$, KCl, MgCl$_2$·6H$_2$O, CaCl$_2$, and a polyoxyethylene-based surfactant were added to pure water to prepare a solution containing 139 mM Na$^+$, 2.8 mM K$^+$, 1.8 mM Ca$^{2+}$, 0.5 mM Mg$^{2+}$, 144 mM Cl$^-$, and 1.1 mM HPO$_4{}^{2-}$. Then, tin-doped indium oxide (ITO) fine particles (manufactured by Mitsui Mining & Smelting Co. , Ltd.) were added to the solution, and the solution was stirred at 40°C for 24 hours to obtain tin-doped indium oxide fine particles coated with hydroxyapatite.

(2) Production of interlayer film for glass laminate and glass laminate

Polyoxyalkylene alkyl phenyl ether phosphate (manufactured by Dai-ichi Kogyo Seiyaku Co., Ltd.) was used as a dispersing agent to disperse the tin-doped indium oxide fine particles coated with hydroxyapatite in a mixed solvent of triethylene glycol bis(2-ethylhexanoate) as a liquid plasticizer and toluene with the use of a paint shaker. In this way, a dispersion liquid was prepared.

2-[5-chloro(2H)-benzotriazole-2-yl]-4-methyl-6-(tert-butyl) phenol (manufactured by Ciba Specialty Chemicals) as a weathering stabilizer and a polymeric phenol-based antioxidant (manufactured by Ciba-Geigy) were dissolved in the dispersion liquid to obtain a dispersion solution.

The dispersion solution and a polyvinyl butyral resin ("S-LEC BH8" manufactured by Sekisui Chemical Co., Ltd) were kneaded using a plastograph, and then the kneaded mixture was extruded from an extruder through a sheet die to obtain an interlayer film for glass laminate having a thickness of 760 $\mu$m.

The composition of the interlayer film for glass laminate calculated based on the mixing ratio of the components thereof is shown in Table 1.

The thus obtained interlayer film for glass laminate was sandwiched between transparent float glass plates (size: 30 cm $\times$ 30 cm, thickness: 2.5 mm) from both sides thereof, and then the resulting laminated body was placed in a rubber bag and deaerated under a vacuum of 20 torr for 20 minutes. The deaerated laminated body was transferred into an oven, and was pressed under vacuum at 90°C for 30 minutes. The thus preliminarily bonded laminated body was pressure-bonded in an autoclave at 135°C and a pressure of 1,176 kPa for 20 minutes to obtain a glass laminate.

(Reference Example 2)

Tin-doped indium oxide (ITO) fine particles (manufactured by Mitsui Mining & Smelting Co., Ltd) were added to a 3 wt% aqueous phosphoric acid solution, and the solution was stirred for 3 hours to adsorb phosphoric acid onto the surface of the fine particles. Thereafter, the solution was filtered to collect the fine particles, and the fine particles were washed with water. Then, the fine particles were added to a 5 wt% aqueous ammonium molybdate solution, and the solution was stirred for 30 minutes to obtain tin-doped indium oxide (ITO) fine particles coated with ammonium phosphomolybdate.

An interlayer film for glass laminate and a glass laminate were obtained in the same manner as in the Reference Example 1 except that the tin-doped indium oxide fine particles coated with hydroxyapatite were replaced with the tin-doped indium oxide fine particles coated with ammonium phosphomolybdate.

(Reference Example 3)

An interlayer film for glass laminate and a glass laminate were obtained in the same manner as in the Example 1 except that the tin-doped indium oxide (ITO) fine particles were replaced with antimony-doped tin oxide (ATO) fine particles.

(Reference Example 4)

An interlayer film for glass laminate and a glass laminate were obtained in the same manner as in the Example 2 except that the tin-doped indium oxide (ITO) fine particles were replaced with antimony-doped tin oxide (ATO) fine particles.

(Comparative Example 1)

An interlayer film for glass laminate and a glass laminate were obtained in the same manner as in the Example 1 except that the tin-doped indium oxide fine particles coated with hydroxyapatite were replaced with tin-doped indium oxide (ITO) fine particles whose surface was not coated with a phosphate.

(Evaluation)

The glass laminates obtained in the Reference Examples 1 to 4 and the Comparative Example 1 were evaluated according to the following method. The evaluation results are shown in Table 1.

A sample (5 cm $\times$ 10 cm) was cut from the glass laminate, and was then irradiated with an intensity of 100 mW/cm$^2$ of UV rays ranging from 295 to 450 nm wavelength for 300 hours at a distance of 235 mm with the use of an EYE Super UV Tester ("SUV-F11" manufactured by Iwasaki Electric Co. , Ltd.). It is to be noted that the temperature of a black panel was 63°C.

Before and after irradiation with UV rays, the visible light transmittance Tv in a wavelength range of 380 to 780 nm and the reflective yellow index value of the glass laminate were measured using a direct recording spectrophotometer ("U-4000" manufactured by Shimadzu Corporation) in accordance with JIS Z 8722 and JIS R 3106.

[Table 1]

| | | | * Ex. 1 | * Ex. 2 | *Ex. 3 | * Ex. 4 | Comp. Ex. 1 |
|---|---|---|---|---|---|---|---|
| Composition of Interlayer Film for Glass Laminate (part by weigh) | Matrix Resin | Polyvinyl butyral resin | 100 | 100 | 100 | 100 | 100 |
| | Liquid Plasticizer | Triethylene glycol bis (2-ethylhexanoate) | 38.0 | 38.0 | 38.0 | 38.0 | 38.0 |
| | Heat Shielding Particles | Tin-doped indium oxide | 0.5 | 0.5 | - | - | 0.5 |
| | | Antimony-doped tin oxide | - | - | 0.5 | 0.5 | - |
| | | Phosphate | Hydroxyapatite | Ammonium phosphomolybdate | Hydroxyapatite | Ammonium phosphomolybdate | - |
| | Dispersing Agent | Polyoxyalkylene alkyl phenyl ether phosphate | 0.1 | 0.1 | 0.1 | 0.1 | 0.1 |
| | Organic Solvent | Toluene | 0.3 | 0.3 | 0.3 | 0.3 | 0.3 |
| | Weathering Solubilizer | 2-[5-chloro (2H)-benzotriazole-2-yl]-4-methyl-6-(tert-butyl)phenol | 0.2 | 0.2 | 0.2 | 0.2 | 0.2 |
| | | Polymeric Phenol-Based Antioxidant | 0.15 | 0.15 | 0.15 | 0.15 | 0.15 |
| Visible Light Transmittance Tv (%) | | Before Irradiation | 80.41 | 78.18 | 78.41 | 76.25 | 83.30 |
| | | After Irradiation for 300 hrs. | 81.47 | 79.69 | 79.90 | 77.07 | 81.54 |

(continued)

| | | * Ex. 1 | * Ex. 2 | *Ex. 3 | * Ex. 4 | Comp. Ex. 1 |
|---|---|---|---|---|---|---|
| Reflective Yellow Index Value | Before Irradiation | -3.41 | 1.26 | 0.98 | 1.74 | -6.10 |
| | After Irradiation for 100 hrs. | -3.47 | 0.95 | 0.47 | 1.57 | -5.92 |
| | After Irradiation for 200 hrs. | -3.91 | 1.10 | 0.55 | 1.61 | -5.98 |
| | After Irradiation for 300 hrs. | -3.77 | 1.08 | 0.17 | 1.38 | -5.76 |
| * Reference | | | | | | |

As can be seen from table 1, in the case of the glass laminate obtained in the Comparative Example 1 using tin-doped indium oxide fine particles not coated with phosphoric acid, the visible light transmittance Tv was reduced and the reflective yellow index value was increased due to irradiation with super UV light. On the other hand, in the case of the glass laminate obtained in each of the Reference Examples 1 to 4 using tin-doped indium oxide coated with phosphoric acid, a reduction in visible light transmittance Tv and an increase in reflective yellow index value were hardly recognized.

(Reference Examples 5 to 8 and Comparative Example 2)

(Reference Example 5)

(1) Preparation of tin-doped indium oxide fine particles coated with insulating metal oxide

Tin-doped indium oxide (ITO) fine particles (manufactured by Mitsui Mining & Smelting Co., Ltd.) were added to a 5 wt% tetraethoxysilane (manufactured by Shin-Etsu Chemical Co., Ltd.) ethanol solution, and the solution was stirred for 7 hours. Thereafter, the solution was filtered to collect the fine particles, and the fine particles were washed with ethanol, and were then subjected to heat treatment under vacuum at 150°C for 2 hours to obtain tin-doped indium oxide fine particles coated with silicon oxide.

(2) Production of interlayer film for glass laminate and glass laminate

Polyoxyalkylene alkyl phenyl ether phosphate (manufactured by Dai-ichi Kogyo Seiyaku Co. , Ltd.) was used as a dispersing agent to disperse the tin-doped indium oxide fine particles coated with silicon oxide in a mixed solvent of triethylene glycol bis(2-ethylhexanoate) as a liquid plasticizer and toluene with the use of a paint shaker. In this way, a dispersion liquid was prepared.

2-[5-chloro(2H)-benzotriazole-2-yl]-4-methyl-6-(tert-butyl) phenol (manufactured by Ciba Specialty Chemicals) as a weathering stabilizer and a polymeric phenol-based antioxidant (manufactured by Ciba-Geigy) were dissolved in the dispersion liquid to obtain a dispersion solution.

The dispersion solution and a polyvinyl butyral resin ("S-LEC BH8" manufactured by Sekisui Chemical Co., Ltd) were kneaded using a plastograph, and then the kneaded mixture was extruded from an extruder through a sheet die to obtain an interlayer film for glass laminate having a thickness of 760 $\mu$m.

The composition of the interlayer film for glass laminate calculated based on the mixing ratio of the components thereof is shown in Table 2.

The thus obtained interlayer film for glass laminate was sandwiched between transparent float glass plates (size: 30 cm $\times$ 30 cm, thickness: 2.5 mm) from both sides thereof, and the resulting laminated body was placed in a rubber bag and deaerated under a vacuum of 20 torr for 20 minutes. The deaerated laminated body was transferred into an oven, and was pressed under vacuum at 90°C for 30 minutes. The thus preliminarily bonded laminated body was pressure-bonded in an autoclave at 135°C and a pressure of 1,176 kPa for 20 minutes to obtain a glass laminate.

(Reference Example 6)

Tin-doped indium oxide (ITO) fine particles (manufactured by Mitsui Mining & Smelting Co., Ltd) were added to a 2 wt% aqueous sodium aluminate (manufactured by Wako Pure Chemical Industries, Ltd.) solution, and the solution was adjusted to a pH of about 4 with sulfuric acid and was then stirred for 5 hours. The solution was filtered to collect the fine particles, and the fine particles were washed with water and were then subjected to heat treatment under vacuum at 100°C for 2 hours to obtain tin-doped indium oxide (ITO) fine particles coated with aluminum oxide.

An interlayer film for glass laminate and a glass laminate were obtained in the same manner as in the Reference Example 5 except that the tin-doped indium oxide fine particles coated with silicon oxide were replaced with the tin-doped indium oxide (ITO) fine particles coated with aluminum oxide.

(Reference Example 7)

Tin-doped indium oxide (ITO) fine particles (manufactured by Mitsui Mining & Smelting Co. , Ltd.) were added to a 5 wt% tetra-normal butoxy zirconium (manufactured by Matsumoto Chemical Industry Co., Ltd.) toluene solution, and the solution was stirred for 24 hours. Then, the solution was filtered to collect the fine particles, and the fine particles were washed and were then subjected to heat treatment under vacuum at 150°C to obtain tin-doped indium oxide fine particles coated with zirconium oxide.

An interlayer film for glass laminate and a glass laminate were obtained in the same manner as in the Reference Example 5 except that the tin-doped indium oxide fine particles coated with silicon oxide were replaced with the tin-doped indium oxide (ITO) fine particles coated with zirconium oxide.

(Reference Example 8)

An interlayer film for glass laminate and a glass laminate were obtained in the same manner as in the Example 5 except that the tin-doped indium oxide (ITO) fine particles were replaced with antimony-doped tin oxide (ATO) fine particles.

(Comparative Example 2)

An interlayer film for glass laminate and a glass laminate were obtained in the same manner as in the Example 5 except that the tin-doped indium oxide fine particles coated with silicon oxide were replaced with tin-doped indium oxide (ITO) fine particles not coated with an insulating metal oxide.

(Evaluation)

The glass laminates obtained in the Reference Examples 5 to 8 and the Comparative Example 2 were evaluated according to the following method. The evaluation results are shown in Table 2.

A sample (5 cm $\times$ 10 cm) was cut from the glass laminate, and was then irradiated with an intensity of 100 mW/cm$^2$ of UV rays ranging from 295 to 450 nm wavelength for 300 hours at a distance of 235 mm with the use of an EYE Super UV Tester ("SUV-F11" manufactured by Iwasaki Electric Co. , Ltd.). It is to be noted that the temperature of a black panel was 63°C.

Before and after irradiation with UV rays, the visible light transmittance Tv in a wavelength range of 380 to 780 nm and the reflective yellow index value of the glass laminate were measured using a direct recording spectrophotometer ("U-4000" manufactured by Shimadzu Corporation) in accordance with JIS Z 8722 and JIS R 3106.

[Table 2]

| | | | * Ex. 5 | * Ex. 6 | * Ex. 7 | * Ex. 8 | Comp. Ex. 2 |
|---|---|---|---|---|---|---|---|
| Composition of Interlayer Film for Glass Laminate (part by weigh) | Matrix Resin | Polyvinyl butyral resin | 100 | 100 | 100 | 100 | 100 |
| | Liquid Plasticizer | Triethylene glycol bis (2-ethylhexanoate) | 38.0 | 38.0 | 38.0 | 38.0 | 38.0 |
| | Heat Shielding Particles | Tin-doped indium oxide | 0.5 | 0.5 | 0.5 | - | 0.5 |
| | | Antimony-doped tin oxide | - | - | - | 0.5 | - |
| | | Kind of Insulating Metal Oxide | Silicon oxide | Aluminum oxide | Zirconium oxide | Silicon oxide | - |
| | Dispersing Agent | Polyoxyalkylene alkyl phenyl ether phosphate | 0.1 | 0.1 | 0.1 | 0.1 | 0.1 |
| | Organic Solvent | Toluene | 0.3 | 0.3 | 0.3 | 0.3 | 0.3 |
| | Weathering Solubilizer | 2-[5-chloro (2H)-benzotriazole-2-yl]-4-methyl-6-(tert-butyl)phenol | 0.2 | 0.2 | 0.2 | 0.2 | 0.2 |
| | | Polymeric Phenol-Based Antioxidant | 0.15 | 0.15 | 0.15 | 0.15 | 0.15 |

(continued)

|  |  | * Ex. 5 | * Ex. 6 | * Ex. 7 | * Ex. 8 | Comp. Ex. 2 |
|---|---|---|---|---|---|---|
| Visible Light Transmittance Tv (%) | Before Irradiation | 81.18 | 81.49 | 81.06 | 81.79 | 83.30 |
|  | After Irradiation for 300 hrs. | 82.95 | 82.60 | 81.87 | 82.61 | 81.54 |
| Reflective Yellow Index Value | Before Irradiation | -5.49 | -5.81 | -6.87 | -5.27 | -6.10 |
|  | After Irradiation for 100 hrs. | -5.66 | -5.90 | -6.94 | -5.48 | -5.92 |
|  | After Irradiation for 200 hrs. | -5.71 | -6.22 | -7.30 | -5.71 | -5.98 |
|  | After Irradiation for 300 hrs. | -6.87 | -6.19 | -7.25 | -5.98 | -5.76 |
| *Reference |  |  |  |  |  |  |

As can be seen from Table 2, in the case of the glass laminate obtained in the Comparative Example 2 using tin-doped indium oxide fine particles not coated with an insulating metal oxide, the visible light transmittance Tv was reduced and the reflective yellow index value was increased due to irradiation with super UV light.

On the other hand, in the case of the glass laminate obtained in each of the Reference Examples 5 to 8 using tin-doped indium oxide fine particles coated with an insulating metal oxide, a reduction in visible light transmittance Tv and an increase in reflective yellow index value were hardly recognized.

(Example 9)

(1) Preparation of tin-doped indium oxide fine particles coated with an organosilicon compound

Tin-doped indium oxide (ITO) fine particles (manufactured by Mitsui Mining & Smelting Co., Ltd.) were suspended in a 2 wt% phenethylsilane (manufactured by AZmax) ethanol solution with the use of a dispersing machine for 24 hours. Thereafter, the powder was collected from the suspension, and was then subjected to heat treatment under vacuum at 160°C for 2 hours to obtain tin-doped indium oxide fine particles coated with a dehydrated condensate of phenethylsilane.

(2) Production of interlayer film for glass laminate and glass laminate

Polyoxyalkylene alkyl phenyl ether phosphate (manufactured by Dai-ichi Kogyo Seiyaku Co. , Ltd.) was used as a dispersing agent to disperse the tin-doped indium oxide fine particles coated with phenethylsilane in a mixed solvent of triethylene glycol bis(2-ethylhexanoate) as a liquid plasticizer and toluene with the use of a ball mill. In this way, a dispersion liquid was prepared.

2-[5-chloro(2H)-benzotriazole-2-yl]-4-methyl-6-(tert-butyl) phenol (manufactured by Ciba Specialty Chemicals) as a weathering stabilizer and a polymeric phenol-based antioxidant (manufactured by Ciba-Geigy) were dissolved in the dispersion liquid to obtain a dispersion solution.

The dispersion solution and a polyvinyl butyral resin ("S-LEC BH8" manufactured by Sekisui Chemical Co., Ltd) were kneaded using a plastograph, and then the kneaded mixture was extruded from an extruder through a sheet die to obtain an interlayer film for glass laminate having a thickness of 760 μm.

The composition of the interlayer film for glass laminate calculated based on the mixing ratio of the constituents thereof is shown in Table 3.

The thus obtained interlayer film for glass laminate was sandwiched between transparent float glass plates (size: 30 cm × 30 cm, thickness: 2.5 mm) from both sides thereof, and the resulting laminated body was placed in a rubber bag and deaerated under a vacuum of 20 torr for 20 minutes. The deaerated laminated body was transferred into an oven, and was pressed under vacuum at 90°C for 30 minutes. The thus preliminarily bonded laminated body was pressure-bonded in an autoclave at 135°C and a pressure of 1,176 kPa for 20 minutes to obtain a glass laminate.

(Example 10)

Tin-doped indium oxide (ITO) fine particles were suspended in a 2 wt% phenyltrimethoxysilane ethanol solution with the use of a dispersing machine for 24 hours. Thereafter, the powder was collected from the suspension, and was then subjected to heat treatment under vacuum at 160°C for 2 hours to obtain tin-doped indium oxide fine particles coated with a dehydrated condensate of phenyltrimethoxysilane.

An interlayer film for glass laminate and a glass laminate were obtained in the same manner as in the Example 9 except that the tin-doped indium oxide fine particles coated with phenethylsilane were replaced with the tin-doped indium oxide (ITO) fine particles coated with phenyltrimethoxysilane.

(Reference Example 11)

Tin-doped indium oxide (ITO) fine particles were suspended in a 2 wt% 3-methacryloxypropyltrimethoxysilane ethanol solution with the use of a dispersing machine for 72 hours. Thereafter, the powder was collected from the suspension, and was then subjected to heat treatment under vacuum at 160°C for 2 hours to obtain tin-doped indium oxide fine particles coated with a dehydrated condensate of 3-methacryloxypropyltrimethoxysilane.

An interlayer film for glass laminate and a glass laminate were obtained in the same manner as in the Example 9 except that the tin-doped indium oxide fine particles coated with phenethylsilane were replaced with the tin-doped indium oxide (ITO) fine particles coated with 3-methacryloxypropyltrimethoxysilane.

(Reference Example 12)

Tin-doped indium oxide (ITO) fine particles were suspended in a 2 wt% 2-(3,4-epoxycyclohexyl)ethyltrimethoxysilane ethanol solution with the use of a dispersing machine for 72 hours. Thereafter, the powder was collected from the suspension, and was then subjected to heat treatment under vacuum at 160°C for 2 hours to obtain tin-doped indium oxide fine particles coated with a dehydrated condensate of 2-(3,4-epoxycyclohexyl)ethyltrimethoxysilane.

An interlayer film for glass laminate and a glass laminate were obtained in the same manner as in the Example 9 except that the tin-doped indium oxide fine particles coated with phenethylsilane were replaced with the tin-doped indium oxide (ITO) fine particles coated with 2-(3,4-epoxycyclohexyl)ethyltrimethoxysilane.

(Example 13)

An interlayer film for glass laminate and a glass laminate were obtained in the same manner as in the Example 9 except that the tin-doped indium oxide (ITO) fine particles were replaced with antimony-doped tin oxide (ATO) fine particles.

(Comparative Example 3)

An interlayer film for glass laminate and a glass laminate were obtained in the same manner as in the Example 9 except that the tin-doped indium oxide (ITO) fine particles coated with phenethylsilane were replaced with tin-doped indium oxide (ITO) fine particles not coated with an organosilicon compound.

(Evaluation)

The glass laminates obtained in the Examples 9 to 13 and the Comparative Example 3 were evaluated according to the following method. The evaluation results are shown in Table 3.

A sample (5 cm $\times$ 10 cm) was cut from the glass laminate, and was then irradiated with an intensity of 100 mW/cm$^2$ of UV rays ranging from 295 to 450 nm wavelength for 300 hours at a distance of 235 mm with the use of an EYE Super UV Tester ("SUV-F11" manufactured by Iwasaki Electric Co., Ltd.). It is to be noted that the temperature of a black panel was 63°C.

Before and after irradiation with UV rays, the visible light transmittance Tv in a wavelength range of 380 to 780 nm and the reflective yellow index value of the glass laminate were measured using a direct recording spectrophotometer ("U-4000" manufactured by Shimadzu Corporation) in accordance with JIS Z 8722 and JIS R 3106.

[Table 3]

| | | | Ex. 9 | Ex. 10 | * Ex. 11 | * Ex. 12 | Ex. 13 | Comp. Ex. 3 |
|---|---|---|---|---|---|---|---|---|
| Composition of Interlayer Film for Glass Laminate (part by weigh) | Matrix Resin | Polyvinyl butyral resin | 100 | 100 | 100 | 100 | 100 | 100 |
| | Liquid Plasticizer | Triethylene glycol bis (2-ethylhexanoate) | 38.0 | 38.0 | 38.0 | 38.0 | 38.0 | 38.0 |
| | Heat Shielding Particles | Tin-doped indium oxide | 0.5 | 0.5 | 0.5 | 0.5 | - | 0.5 |
| | | Antimony-doped tin oxide | - | - | - | - | 0.5 | - |
| | | Organosilicon Compound | Phenethylsilane | Phenyl trimethoxysilane | 3-methacryloxy propyltrimethoxy silane | 2-(3,4-epoxycyclo hexyl) ethyltrimethoxy silane | Phenethylsilane | - |
| | Dispersing Agent | Polyoxyalkylene alkyl phenyl ether phosphate | 0.1 | 0.1 | 0.1 | 0.1 | 0.1 | 0.1 |
| | Organic Solvent | Toluene | 0.3 | 0.3 | 0.3 | 0.3 | 0.3 | 0.3 |
| | Weathering Solubilizer | 2-[5-chloro (2H)-benzotriazole-2-yl]-4-methyl-6-(tert-butyl)phenol | 0.2 | 0.2 | 0.2 | 0.2 | 0.2 | 0.2 |
| | | Polymeric Phenol-Based Antioxidant | 0.15 | 0.15 | 0.15 | 0.15 | 0.15 | 0.15 |
| Visible Light Transmittance Tv (%) | Before Irradiation | | 81.94 | 82.06 | 81.58 | 81.64 | 81.35 | 83.30 |
| | After Irradiation for 300 hrs. | | 84.97 | 84.69 | 83.59 | 83.14 | 84.02 | 81.54 |

(continued)

| | | Ex. 9 | Ex. 10 | * Ex. 11 | * Ex. 12 | Ex. 13 | Comp. Ex. 3 |
|---|---|---|---|---|---|---|---|
| Reflective Yellow Index Value | Before Irradiation | -6.24 | -6.72 | -6.28 | -6.51 | -6.70 | -6.10 |
| | After Irradiation for 100 hrs. | -7.35 | -7.09 | -7.14 | -6.71 | -7.14 | -5.92 |
| | After Irradiation for 200 hrs. | -7.42 | -7.14 | -7.05 | -6.99 | -7.29 | -5.98 |
| | After Irradiation for 300 hrs. | -7.39 | -7.33 | -7.66 | -7.30 | -7.15 | -5.76 |
| *Reference | | | | | | | |

As can be seen from Table 3, in the case of the glass laminate obtained in the Comparative Example 3 using heat shielding particles not coated with an organosilicon compound, the visible light transmittance Tv was reduced and the reflective yellow index value was increased due to irradiation with super UV light.

On the other hand, in the case of the glass laminate obtained in each of the Examples 9 to 13 (11 and 12 Reference) using heat shielding particles coated with an organosilicon compound, a reduction in visible light transmittance Tv and an increase in reflective yellow index value were hardly recognized.

(Example 14)

(1) Preparation of heat shielding particles coated with an inert substance

Tin-doped indium oxide (ITO) powder (manufactured by Mitsui Mining & Smelting Co., Ltd.) was added to an ethanol solution containing 2 % of tetraethoxysilane ("KBE04" manufactured by Shin-Etsu Chemical Co., Ltd.) and a dispersing agent, and was pulverized using a beads mill and dispersed in the ethanol solution. Then, the powder was collected and dried under vacuum at 150°C to obtain tin-doped indium oxide powder coated with silicon oxide.

(2) Preparation of dispersion liquid of heat shielding particles

The thus obtained tin-doped indium oxide powder coated with silicon oxide was added to a triethylene glycol bis(2-ethylhexanoate) solution containing phenyltrimethoxysilane ("KBM103" manufactured by Shin-Etsu Chemical Co., Ltd.), xylene, and a dispersing agent. The heat shielding particles were suspended in the solution using a beads mill to react with phenyltrimethoxysilane. In this way, a dispersion liquid of heat shielding particles whose surface had been hydrophobized was prepared.

The composition of the thus prepared dispersion liquid of heat shielding particles is shown in Table 4.

(3) Production of interlayer film for glass laminate and glass laminate

2.97 parts by weight of 2-[5-chloro(2H)benzotriazole-2-yl]-4-methyl-6-(tert-butyl)p henol and 3.43 parts by weight of a polymeric phenol-based antioxidant were dissolved in 100 parts by weight of triethylene glycol bis(2-ethylhexanoate) to prepare a diluent.

The dispersion liquid of heat shielding particles was diluted two-fold with the diluent to prepare a diluted dispersion liquid of heat shielding particles.

The thus obtained diluted dispersion liquid of heat shielding particles was left standing under the conditions of 20°C and 50% RH for 24 hours or 1 week. Then, 41.42 parts by weight of the diluted dispersion liquid of heat shielding particles was added to 100 parts by weight of a polyvinyl butyral resin ("S-LEC BH-8" manufactured by Sekisui Chemical Co., Ltd), they were mixed using a plastograph, and the mixture was melt-kneaded using an extruder and then extruded through a sheet die to obtain an interlayer film for glass laminate having a thickness of 760 μm.

The thus obtained interlayer film for glass laminate was sandwiched between two transparent inorganic glass plates, and the resulting laminated body was placed in a rubber bag adjusted to a predetermined temperature, and temperature was increased to 100°C while keeping a pressure inside the rubber bag at -53.2 kPa. The temperature and pressure were kept at 100°C and -53.2 kPa for 20 minutes, and then the laminated body was cooled and the reduced pressure was released. In this way, two glass laminates were produced. One glass laminate using the diluted dispersion liquid of heat shielding particles left standing for 24 hours was defined as a glass laminate 1, and the other one using the diluted dispersion liquid of heat shielding particles left standing for 1 week was defined as a glass laminate 2.

(Comparative Example 4)

Interlayer films for glass laminate and glass laminates were obtained in the same manner as in the Example 14 except that treatment for hydrophobizing the tin-doped indium oxide powder was omitted.

(Evaluation)

The dispersion liquids of heat shielding particles and the glass laminates obtained in the Example 14 and the Comparative Example 14 were evaluated according to the following methods. The evaluation results are shown in Table 5.

(1)Evaluation of dispersion stability

The dispersion liquid of heat shielding particles was diluted with triethylene glycol bis(2-ethylhexanoate) whose amount was two times that of the liquid plasticizer contained in the dispersion liquid of heat shielding particles, and was then left standing under conditions of 20°C and 50% RH for 24 hours or 1 week. Thereafter, specific viscosity, thixotropy index, particle diameter, and presence or absence of precipitation were determined according to the following methods and evaluated.

(Evaluation method of specific viscosity)

The viscosity of the dispersion liquid was measured by a B-type viscometer ("B8U" manufactured by Tokyo Keiki Co., Ltd.) with a No. 3 rotor at a rotation speed of 1 rpm, and a specific viscosity was calculated using the following formula. It is to be noted that in a case where precipitation was observed in the dispersion liquid, the precipitation was kept from contact with the rotor.
specific viscosity after 24 hour incubation = viscosity measured after 24 hour incubation (1 rpm) / viscosity measured before incubation (1 rpm)
specific viscosity after 1 week incubation = viscosity measured after 1 week incubation (1 rpm) / viscosity measured before incubation (1 rpm)

(Evaluation method of thixotropy index)

The viscosity of the dispersion liquid was measured by a B-type viscometer ("B8U" manufactured by Tokyo Keiki Co., Ltd.) with a No. 3 rotor at a rotation speed of 1 rpm and 10 rpm, and a thixotropy index was calculated using the following formula. It is to be noted that in a case where precipitation was observed in the dispersion liquid, the precipitation was kept from contact with the rotor.
thixotropy index after 24 hour incubation = viscosity measured after 24 hour incubation (1 rpm) / viscosity measured after 24 hour incubation (10 rpm)
thixotropy index after 1 week incubation = viscosity measured after 1 week incubation (1 rpm) / viscosity measured after 1 week incubation (10 rpm)

(Evaluation method of particle diameter)

The diluted dispersion liquid and the diluted dispersion liquid left standing for 24 hours or 1 week were diluted with triethylene glycol bis(2-ethylhexanoate) so that the concentration of tin-doped indium oxide was 0.5 wt%. In this way, evaluation samples were obtained. For each of the evaluation samples, average particle diameter, D90-D50, and D50-D10 were determined using a particle size distribution analyzer ("Microtrac UAM-1" manufactured by Nikkiso Co., Ltd.). Based on the measurement values of average particle diameter, an increment of average particle diameter was calculated using the following formula.
increment of average particle diameter after 24 hour incubation = average particle diameter measured after 24 hour incubation - average particle diameter measured just after dilution
increment of average particle diameter after 1 week incubation = average particle diameter measured after 1 week incubation - average particle diameter measured just after dilution

(Evaluation method of amount of precipitated heat shielding particles)

After incubation, the dispersion liquid was transferred into a transparent glass graduated cylinder having an outer diameter of 12 mm to visually observe the presence or absence of precipitation.

(2)Evaluation of glass laminate

For each of the glass laminates, average particle diameter of heat shielding particles contained in its interlayer film for glass laminate, visible light transmittance Tv, and haze were determined according to the following methods.

(Method for determining average particle diameter of heat shielding particles contained in interlayer film for glass laminate)

An ultrathin section of the interlayer film for glass laminate was prepared, and was photographed using a transmission electron microscope (TEM) ("H-7100FA" manufactured by Hitachi Ltd.). It is to be noted that an area of 3 $\mu$m $\times$ 4 $\mu$m in the ultrathin section was photographed at 20, 000-fold magnification and enlarged 3 times upon printing.
The longer diameter of each of all the ITO fine particles contained in the subject area of 3 $\mu$m $\times$ 4 $\mu$m was measured to determine a mean volume particle diameter.

(Measurement of visible light transmittance of glass laminate)

The visible light transmittance Tv in a wavelength range of 380 to 780 nm wavelength and the reflective yellow index value of the glass laminate were measured using a direct recording spectrophotometer ("U-4000" manufactured by Shimadzu Corporation) in accordance with JIS Z 8722 and JIS R 3106.

(Evaluation method of haze of glass laminate)

The haze of the glass laminate was measured in accordance with JIS K 6714.

[Table 4]

| | (part by weight) |
|---|---|
| | Example 14 |
| Heat Shielding Particles (Tin-Doped Indium Oxide) | 1.99 |
| Surface Treatment Agent for Heat Shielding Particles | Phenylmethoxysilane |
| Liquid Plasticizer | 100 |
| Xylene | 12.9 |
| Dispering Agent | 0.2 |

[Table 5]

| | | | Example 14 | Comparative Example 4 |
|---|---|---|---|---|
| Properties of Dispersion Liquid of Heat Shielding Particles | After 24 hrs. Incubation | Specific Viscosity | 1.0 | 1.0 |
| | | Thixotropy Index | 1.0 | 1.0 |
| | | Average Particle Diameter (nm) | 31.6 | 58 |
| | | D90-D50 (nm) | 12 | 12 |
| | | D50-D10 (nm) | 13 | 18 |
| | | Precipitation | Absent | Present |
| | After 1 Week Incubation | Specific Viscosity | 1.0 | 1.5 |
| | | Thixotropy Index | 1.0 | 1.4 |
| | | Average Particle Diameter (nm) | 33.3 | 69 |
| | | D90-D50 (nm) | 17 | 25 |
| | | D50-D10 (nm) | 18 | 32 |
| | | Precipitation | Absent | Almost all heat shielding particles were precipitated. |

(continued)

|  |  | Example 14 | Comparative Example 4 |
|---|---|---|---|
| Evaluation of Glass Laminate | Average Particle Diameter of Heat Shielding Particles Contained in Interlayer Film (nm) | 30.5 | 76 |
|  | Visible Light Transmittance (%) | 83.6 | 81.3 |
|  | Haze (%) | 0.5 | 1.2 |

**Claims**

1. An interlayer film for heat shielding glass laminate comprising:

a matrix resin;
a plasticizer; and
tin-doped indium oxide fine particles and/or antimony-doped tin oxide fine particles coated with an insulating metal oxide, which are further coated with an organosilicon compound represented by the following formula (A) : $Si(OR^1)_a R^2_b$ (where $R^1$ represents an alkyl group, $R^2$ represents an organic functional group containing an alkyl group, a polyoxyalkylene group, a phenyl group, a styryl group, a (meth)acryloxy group, an epoxy group, a vinyl group, an isocyanate group, a mercapto group or a ureido group, and a and b are each an integer of 1 to 3, provided that a + b is 4, wherein the organosilicon compound is an aromatic organosilicon compound.

2. The interlayer film for glass laminate according to claim 1, wherein a visible light transmittance variation (ΔTv) calculated after irradiation with super UV light for 300 hours by the following formula (1) is 0 % or higher, and wherein a reflective yellow index value variation (ΔYI) calculated after irradiation with super UV light for 300 hours by the following formula (2) is 0 or a negative value.

Formula (1): visible light transmittance variation (ΔTv) = (visible light transmittance measured after irradiation with super UV light) − (visible light transmittance measured before irradiation with super UV light)

Formula (2): reflective YI value variation (ΔYI) = (reflective yellow index value measured after irradiation with super UV light) − (reflective yellow index value measured before irradiation with super UV light)

3. An interlayer film for heat shielding glass laminate according to claim 1 or 2, wherein the insulating metal oxide is selected from the group consisting of silicon oxide, aluminum oxide, and zirconium oxide.

4. A glass laminate obtained by using the interlayer film for glass laminate according to any one of claims 1 to 3.

**Patentansprüche**

1. Zwischenschichtfolie für wärmeabweisendes Glaslaminat, umfassend:

ein Matrixharz,

einen Weichmacher und

mit einem dämmenden Metalloxid beschichtete zinndotierte Indiumoxid-Feinpartikel und/oder antimondotierte Zinnoxid-Feinpartikel, welche ferner mit einer Organosiliziumverbindung, dargestellt durch die folgende Formel (A): $Si(OR^1)_aR^2_b$ (wobei $R^1$ eine Alkylgruppe darstellt, $R^2$ eine organische funktionelle Gruppe, enthaltend eine Alkylgruppe, eine Polyoxyalkylengruppe, eine Phenylgruppe, eine Styrylgruppe, eine (Meth)acryloxygruppe, eine Epoxygruppe, eine Vinylgruppe, eine Isocyanatgruppe, eine Mercaptogruppe oder eine Ureidogruppe darstellt, und a und b jeweils eine ganze Zahl von 1 bis 3 sind, vorausgesetzt, dass a + b 4 ist), beschichtet sind, wobei die Organosiliziumverbindung eine aromatische Organosiliziumverbindung ist.

**2.** Zwischenschichtfolie für Glaslaminat gemäß Anspruch 1, wobei eine Durchlässigkeitsvariation für sichtbares Licht ($\Delta Tv$), berechnet nach Bestrahlung mit Super-UV-Licht für 300 Stunden, durch die folgende Formel (1) 0% oder höher beträgt und wobei eine Reflexvariation des Gelbindexwerts ($\Delta YI$), berechnet nach Bestrahlung mit Super-UV-Licht für 300 Stunden, durch die folgende Formel (2) 0 ist oder einen negativen Wert aufweist.

Formel (1): Durchlässigkeitsvariation für sichtbares Licht ($\Delta Tv$) = (Durchlässigkeit für sichtbares Licht, gemessen nach Bestrahlung mit Super-UV-Licht) – (Durchlässigkeit für sichtbares Licht, gemessen vor Bestrahlung mit Super-UV-Licht)

Formel (2): Reflexvariation des YI-Werts ($\Delta YI$) = (reflektiver Gelbindexwert, gemessen nach Bestrahlung mit Super-UV-Licht) – (reflektiver Gelbindexwert, gemessen vor Bestrahlung mit Super-UV-Licht)

**3.** Zwischenschichtfolie für wärmeabweisendes Glaslaminat gemäß Anspruch 1 oder 2, wobei das dämmende Metalloxid ausgewählt ist aus der Gruppe, bestehend aus Siliziumoxid, Aluminiumoxid und Zirkoniumoxid.

**4.** Glaslaminat, erhältlich durch Verwendung der Zwischenschichtfolie für Glaslaminat gemäß irgendeinem der Ansprüche 1 bis 3.

**Revendications**

**1.** Film de couche intermédiaire pour blinder thermiquement du stratifié-verre comprenant :

une résine matrice ;
un plastifiant; et
de fines particules d'oxyde d'indium dopé à l'étain et/ ou de fines particules d'oxyde dopé à l'étain d'antimoine, recouvertes d'un oxyde métallique isolant, qui sont en outre recouvertes d'un composé d'organosilicone représenté par la formule suivante (A) : $Si(OR^1)_aR^2b$ (où $R^1$ représente un groupe alkyle,
$R^2$ représente un groupe organique fonctionnel contenant un groupe alkyle, un groupe polyoxyalkylène, un groupe phényle, un groupe styryle, un groupe (meth)acryloxy, un groupe époxy, un groupe vinyle, un groupe isocyanate, un groupe mercapto ou un groupe ureido, et a et b sont chacun un nombre entier de 1 à 3, à condition que a + b soit égal à 4, où le composé d'organosilicone est un composé d'organosilicone aromatique.

**2.** Film de couche intermédiaire pour le stratifié-verre selon la revendication 1, où une variation de transmission visible de lumière ($\Delta Tv$) calculée après irradiation avec super lumière UV pendant 300 heures par la formule suivante (1) est de 0 % ou supérieur, et où une variation de valeur d'indice jaune réfléchissant ($\Delta YI$) calculée après irradiation avec super lumière UV pendant 300 heures par la formule suivante (2) est de 0 ou une valeur négative.

Formule (1): variation de transmission de la lumière

visible ($\Delta$Tv) = transmission de la lumière visible mesurée après irradiation à la super lumière UV) – (transmission de la lumière visible mesurée avant irradiation avec super lumière UV)

Formule (2): variation de valeur YI réfléchissante ($\Delta$YI) = (valeur d'index jaune réfléchissant mesurée après irradiation à la super lumière UV) – (valeur d'index jaune réfléchissant mesurée après irradiation à la super lumière UV)

3. Film de couche intermédiaire pour blinder thermiquement du stratifié-verre selon la revendication 1 ou 2, où l'oxyde de métal est sélectionné à partir du groupe consistant en oxyde de silicone, oxyde d'aluminium et oxyde de zirconium.

4. Stratifié-verre obtenu en utilisant un film de couche intermédiaire pour stratifié-verre selon l'une quelconques des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0125162 A
- EP 1136457 A1
- EP 1188551 A1
- EP 1193048 A2
- EP 0727306 A2

- JP 2000016841 A
- JP 2002326846 A
- JP 2001240769 A
- JP 2000063158 A
- JP 2001206745 A